Europäisches Patentamt

European Patent Office

Office européen des brevets

(19)

(11) Veröffentlichungsnummer: **0 088 407**
**B1**

(12) **EUROPÄISCHE PATENTSCHRIFT**

(45) Veröffentlichungstag der Patentschrift:
27.11.85

(21) Anmeldenummer: 83102161.3

(22) Anmeldetag: 04.03.83

(51) Int. Cl.⁴: **B 23 C 3/06**

(54) **Kurbelwellenbearbeitungsmaschine.**

(30) Priorität: 05.03.82 DE 3208046

(43) Veröffentlichungstag der Anmeldung:
14.09.83 Patentblatt 83/37

(45) Bekanntmachung des Hinweises auf die Patenterteilung:
27.11.85 Patentblatt 85/48

(84) Benannte Vertragsstaaten:
AT DE FR GB IT

(56) Entgegenhaltungen:
DE - A - 2 658 970
DE - A - 2 808 880
GB - A - 2 045 138
US - A - 2 650 522

(73) Patentinhaber: Oerlikon-Boehringer GmbH, Stuttgarter Strasse 50 Postfach 220, D-7320 Göppingen (DE)

(72) Erfinder: Berbalk, Hermann, Liebensteinstrasse 7, D-7320 Göppingen (DE)

(74) Vertreter: Vogeser, Werner, Dipl.-Ing., Patentanwälte Hansmann & Vogeser Albert-Rosshaupter-Strasse 65, D-8000 München 70 (DE)

ACTORUM AG

## Beschreibung

Die Erfindung betrifft eine Werkzeugspanneinrichtung entsprechend dem Oberbegriff des Anspruchs 1.

Eine derartige Werkstückspanneinrichtung ist aus der DE-AS Nr. 2658970 bekannt. Bei dieser Werkstückspanneinrichtung sind die scheibenförmigen Werkstückstützbacken wegen der für ihre Öffnungs- und Schliessbewegungen notwendigen Längsführungen nicht so dicht gegeneinander fahrbar, dass die beiden vorgesehenen Fräseinheiten zur gleichzeitigen Bearbeitung von zwei Hublagern an dem zwischen diesen beiden Hublagern liegenden Mittellager angreifen können, wenn die Hublager dicht beieinander liegen.

Der Erfindung liegt die Aufgabe zugrunde, die Werkstückspanneinrichtung der eingangs genannten Art so auszubilden, dass die Werkstückstützbacken so eng aneinander gestellt werden können, dass sie auf einem einzigen zwischen zwei zu bearbeitenden Hublagern liegenden Mittellager Platz finden.

Gelöst wird diese Aufgabe gemäss der Erfindung durch die im kennzeichnenden Teil des Anspruchs 1 angegebenen Merkmale.

Die Erfindung geht von der Erkenntnis aus, dass bei der Bearbeitung der Hublager vor allem in radialer Richtung Kräfte auftreten. Dies bedeutet, dass die axiale Beanspruchung der Stützbacken gering ist, so dass deren Dicke relativ gering sein kann, so dass bei einer Kurbelwellenfräsmaschine mit zwei Fräseinheiten und zwei in der vorgeschlagenen Weise ausgebildeten Werkstückspanneinrichtungen erreicht werden kann, dass beide Werkstückspanneinrichtungen bei der gleichzeitigen Bearbeitung von zwei Hublagern an dem dazwischenliegenden Mittellager gleichzeitig angreifen können.

Die Erfindung wird nachstehend anhand der Fig. 1 bis 5 beispielsweise erläutert. Es zeigt:

Fig. 1 eine Seitenansicht einer Werkstückspanneinrichtung der Kurbelwellenfräsmaschine;

Fig. 2 eine Aufsicht der Werkstückspanneinrichtung;

Fig. 3 einen Vertikalschnitt der Werkstückspanneinrichtung;

Fig. 4 und 5 die Lagerung einer Abdichtleiste.

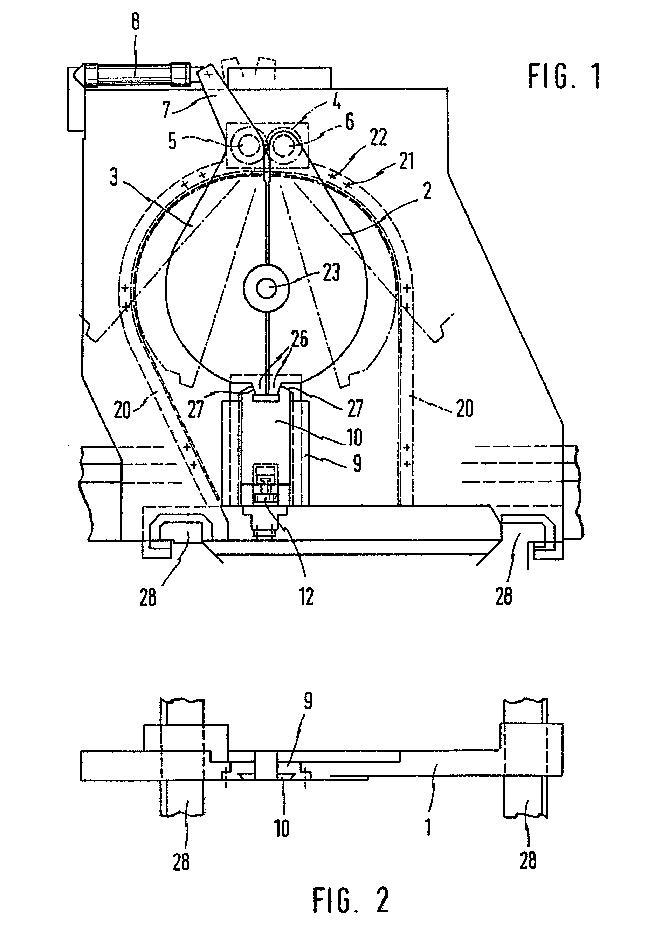

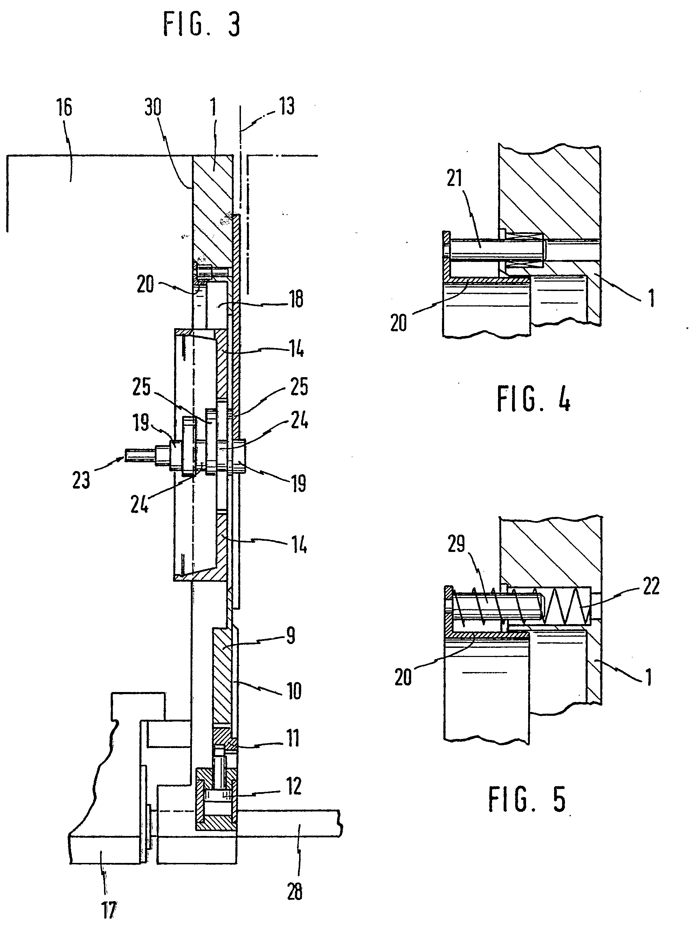

Die gezeigte Kurbelwellenfräsmaschine dient zur Bearbeitung einer sechshubigen Kurbelwelle 23, von der in Fig. 1 nur die zur Symmetrielinie 13 symmetrische linke Hälfte gezeigt ist. Die Kurbelwelle hat Mittellager 19, Hublage 24 und Seitenwangen 25. Zur Bearbeitung des in Fig. 3 rechten Hublagers 24 ist eine Fräseinheit 16 vorgesehen, deren rechtsseitige Endfläche 30 vor dem in Fig. 3 linken Hublager 24 endet. Die Fräseinheit 16 trägt einen innenverzahnten Scheibenfräser 14, der über die Endfläche 30 der Fräseinheit 16 vorsteht und zwar so weit, dass das rechte Hublager 24 bearbeitet werden kann. Der Scheibenfräser hat Durchbrüche zum Abführen der entstehenden Späne.

Der Fräseinheit 16 ist eine Werkstückspanneinrichtung zugeordnet, die einen Grundkörper 1 aufweist, der an der Endfläche 30 der Fräseinheit angeordnet ist. Am Grundkörper 1 der Werkstückspanneinrichtung sind, wie insbesondere Fig. 1 zeigt, zwei Stützbacken 2 und 3 an Bolzen 6 schwenkbar gelagert angeordnet. Die Stützbacken 2 und 3 umschliessen das in Fig. 3 rechte Mittellager und bewirken dadurch die bei der Bearbeitung erforderliche Spannung der Kurbelwelle 23.

Die beiden Stützbacken 2 und 3 haben am unteren Ende Ansätze 26, die an den einander abgewandten Seiten Schrägflächen 27 aufweisen.

Am Grundkörper 1 der Werkstückspanneinrichtung ist unterhalb der Stützbacken 2 und 3 ein Klemmschieber 10 in einer Führung 9 verschiebbar gelagert. Der Klemmschieber 10 hat am oberen Ende eine Ausnehmung mit Schrägflächen entsprechend den Schrägflächen 27 der Ansätze 26 der beiden Stützbacken 2 und 3.

Die Stützbacken 2 und 3 weisen koaxial zu den Bolzen 6 in Eingriff stehende Zahnräder 4 und 5 auf. Die eine Stützbacke ist mit einem Hebel 7 verlängert, der mit dem Kolben eines Hydraulikzylinders 8 verbunden ist. Durch Betätigen des Hydraulikzylinders 8 können somit die beiden Stützbacken 2 und 3 gleichzeitig geschwenkt, d.h. geöffnet und geschlossen werden. Im geschlossenen Zustand umschliessen die Stützbacken das Mittellager 19 der Kurbelwelle 23 nicht vollständig, sondern es verbleibt zwischen beiden ein geringer Spalt. Die eigentliche Spannbewegung wird mittels des Klemmschiebers 10 bewirkt, der bei der Verschiebung nach oben an den Schrägflächen 27 der Ansätze 26 der Stützbacken 2 und 3 angreift und diese am Mittellager 19 verspannt.

Die Betätigung des Klemmschiebers 10 erfolgt mittels eines Hydraulikzylinders 12, dessen Kolben über ein Kuppelstück 11 den Klemmschieber 10 betätigt.

Der zwischen der Fräseinheit 16 und dem Grundkörper 1 gebildete Späneraum 18 ist durch eine Abdichtleiste 20 in axialer Richtung abgeschlossen, deren einer Seitenrand vertikal und deren anderer hierzu schräg verläuft, wie Fig. 1 zeigt.

Die Abdichtleiste 20 ist durch Führungsbolzen 21 (Fig. 4) und auf Bolzen 29 geführte Druckfedern 22 am Grundkörper 1 der Spanneinrichtung gelagert. Die Bolzen 21 und die Druckfedern 22 sind paarweise über den Umfang der Abdichtleiste 20 verteilt, wie durch (+)-Markierungen in Fig. 1 angedeutet ist.

Durch die Druckfedern wird die Abdichtleiste 20 an die Fräseinheit 16 angedrückt, so dass auch Kurbelwellen bearbeitet werden können, bei denen zwei Hublager unmittelbar beieinanderliegen, wie dies bei sogenannten Splitpinausführungen der Fall ist, so dass bei der Bearbeitung, übertragen auf den Fall der Fig. 3, die Spannung am Mittellager 19 aufrechterhalten wird, wenn das linke Hublager (in diesem Falle sind also keine Seitenwangen vorhanden) bearbeitet wird. Der nun grössere Abstand zwischen dem Grundkörper 1 der Werkstückspanneinrichtung und der Fräseinheit 16 wird durch die Verschiebbarkeit der an den Bolzen 21 und 29 geführten Abdichtleiste 20 ausgeglichen.

Der Grundkörper 1 kann bezüglich des Unterteils 17, der die Fräseinheit 16 trägt, fest oder auf Führungen 28 verschiebbar angeordnet sein, so dass die Werkstückspanneinrichtung in die jeweils erforderliche Spannposition gefahren werden kann.

In Fig. 3 ist nur die zur Symmetrielinie 13 linksseitige Fräseinheit mit zugehöriger Werkstückspanneinrichtung gezeigt, jedoch ist die rechtsseitige Fräseinheit mit der zugehörigen Werkstückspanneinrichtung entsprechend ausgebildet. Diese Werkstückspanneinrichtung greift mit ihren Stützbacken über dasselbe Mittellager 19, wie die Stützbacken 2 und 3 der linksseitigen Werkstückspanneinrichtung.

**Patentansprüche**

1. Werkstückspanneinrichtung an den Fräseinheiten einer Kurbelwellenfräsmaschine mit zwei Fräseinheiten mit je einem innenverzahnten Scheibenfräser, bestehend aus zwei scheibenförmigen Werkstückstützbacken, die das dem zu bearbeitenden Hublager benachbarte Mittellager umschliessen und mittels einer Antriebseinrichtung bewegbar sind, dadurch gekennzeichnet, dass die Werkstückstützbacken (2, 3) so schmal ausgebildet sind, dass sie gemeinsam auf einem einzigen Mittellager Platz finden, dass beide Werkstückstützbacken (2, 3) auf Bolzen (6) schwenkbar gelagert sind und miteinander in Eingriff stehende Zahnräder (4, 5) besitzen, dass eine der Werkstückstützbacken direkt mit der Antriebseinrichtung (8) verbunden ist, dass die Werkstückstützbacken (2, 3) an ihren freien Enden je einen Ansatz (6) mit einer Schrägfläche (27) aufweisen, und dass unterhalb der Werkstückstützbacken (2, 3) ein vertikal verschiebbarer Klemmschieber (10) gelagert ist, der am einen Ende eine Ausnehmung mit den Schrägflächen (27) der Werkstückstützbacken (2, 3) entsprechenden Schrägflächen zur Verriegelung und zum Spannen der Werkstückstützbacken (2, 3) aufweist.

2. Werkstückspanneinrichtung nach Anspruch 1, dadurch gekennzeichnet, dass die Antriebseinrichtung (8) aus einem Hydraulikzylinder besteht.

3. Werkstückspanneinrichtung nach Anspruch 2, dadurch gekennzeichnet, dass eine der Werkstückstützbacken (2, 3) durch einen Hebel (7) verlängert ist, der mit dem Kolben des Hydraulikzylinders (8) verbunden ist.

4. Werkstückspanneinrichtung nach einem der Ansprüche 1 bis 3, dadurch gekennzeichnet, dass der Klemmschieber (10) mittels eines Hydraulikzylinders (12) verschiebbar ist.

5. Werkstückspanneinrichtung nach einem der Ansprüche 1 bis 4, dadurch gekennzeichnet, dass die Scheibenfräser (14) jeder Fräseinheit (16) gekröpft ausgebildet sind und axial über die entsprechende Fräseinheit (16) vorstehen.

6. Werkzeugspanneinrichtung nach Anspruch 5, dadurch gekennzeichnet, dass zwischen jeder Fräseinheit (16) und dem Grundkörper (1) eine Abdichtleiste (20) angeordnet ist.

7. Werkzeugspanneinrichtung nach Anspruch 6, dadurch gekennzeichnet, dass die Abdichtleiste (20) Bolzen (21, 29) aufweist, mit denen sie im Grundkörper (1) geführt ist.

8. Werkstückspanneinrichtung nach Anspruch 7, gekennzeichnet durch Druckfedern (23), die die Abdichtleisten (20) gegen die Fräseinheit vorspannen.

9. Werkstückspanneinrichtung nach einem der Ansprüche 1 bis 8, dadurch gekennzeichnet, dass sie axial verschiebbar ist.

10. Werkstückspanneinrichtung nach Anspruch 9, dadurch gekennzeichnet, dass sie an dem die Fräseinheit tragenden Unterteil (17) geführt ist.

**Claims**

1. Workpiece holding device on the milling units of a crankshaft milling machine with two millings units each with an internally-toothed milling cutter, comprising two disc-shaped workpiece supporting jaws, which enclose the main bearing adjacent the big end bearing to be machined and which are movable by means of a driving device, characterized in that the workpiece supporting jaws (2, 3) are made so narrow that they fit together on a single main bearing, that both workpiece supporting jaws (2, 3) are journalled pivotally on bolts (6) and include mutually-engaged gearwheels (4, 5), that one of the workpiece supporting jaws is connected directly with the driving device (8), that the workpiece supporting jaws (2, 3) each have at their free ends an extension (6) with an inclined surface (27), and that, below the workpiece supporting jaws (2, 3), a vertically-movable clamping member (10) is mounted, which at one end has a recess with inclined surfaces corresponding to the inclined surfaces (27) of the workpiece supporting jaws (2, 3), for locking and holding the workpiece supporting jaws (2, 3).

2. Workpiece holding device according to Claim 1, characterized in that the driving device (8) comprises a hydraulic cylinder.

3. Workpiece holding device according to Claim 2, characterized in that one of the workpiece supporting jaws (2, 3) is extended by a lever (7), which is connected to the piston of the hydraulic cylinder (8).

4. Workpiece holding device according to any of Claims 1 to 3, characterized in that the clamping member (10) is movable by means of a hydraulic cylinder (12).

5. Workpiece holding device according to any of Claims 1 to 4, characterized in that the milling cutter (14) of each milling unit (16) is cranked and projects axially over the corresponding milling unit (16).

6. Workpiece holding device according to Claim 5, characterized in that a sealing strip (20) is arranged between each milling unit (16) and the machine frame (1).

7. Workpiece holding device according to Claim 6, characterized in that the sealing strip (20) has bolts (21, 29) by which it is guided in the machine frame (1).

8. Workpiece holding device according to Claim 7, characterized by compression springs (23) which urge the sealing strips (20) against the milling unit.

9. Workpiece holding device according to any of Claims 1 to 8, characterized in that it is axially movable.

10. Workpiece holding device according to Claim 9, characterized in that it is guided on the underpart (17) carrying the milling unit.


## Revendications

1. Dispositif de serrage de pièces sur des unités de fraisage d'une machine de fraisage à vilebrequin comportant deux unités de fraisage avec un disque de fraisage respectif à denture intérieure constitué par deux mâchoires d'appui de pièces en forme de disques qui entourent le palier central voisin du palier de course à travailler et sont mobiles au moyen d'un dispositif de commande, caractérisé en ce que les mâchoires (2, 3) d'appui de pièces sont assez étroites pour trouver place ensemble sur un seul palier central, en ce que les deux mâchoires d'appui de pièces (2, 3) sont montées de façon à pouvoir pivoter sur des boulons (6), et possèdent des pignons dentés (4, 5) se trouvant en prise l'un avec l'autre, en ce que l'une des mâchoires d'appui de pièces est reliée directement au dispositif de commande (8), en ce que les mâchoires (2, 3) d'appui de pièces présentent à leurs extrémités libres un appendice respectif (6) ayant une face oblique (27), et en ce que, en dessous des mâchoires d'appui de pièces (2, 3), est monté un tiroir de serrage (10) pouvant se déplacer verticalement et qui présente à une extrémité un évidement ayant des faces obliques correspondant aux faces obliques (27) des mâchoires d'appui de pièces (2, 3) pour verrouiller et pour serrer les mâchoires d'appui de pièces (2, 3).

2. Dispositif de serrage de pièces selon la revendication 1, caractérisé en ce que le dispositif de commande (8) est constitué par un cylindre hydraulique.

3. Dispositif de serrage de pièces selon la revendication 2, caractérisé en ce qu'une mâchoire d'appui de pièces (2, 3) est prolongée par un levier (7) qui est relié au piston du cylindre hydraulique (8).

4. Dispositif de serrage de pièces selon l'une des revendications 1 à 3, caractérisé en ce que le tiroir de serrage (10) peut être déplacé au moyen d'un cylindre hydraulique (12).

5. Dispositif de serrage de pièces selon l'une des revendications 1 à 4, caractérisé en ce que les fraises à disque (14) de chaque unité de fraisage (16) sont coudées et dépassent axialement au-dessus de l'unité de fraisage correspondante (16).

6. Dispositif de serrage de pièces selon la revendication 5, caractérisé en ce que, entre chaque unité de fraisage (16) et le corps principal (1), est disposé un rebord de scellement (20).

7. Dispositif de serrage de pièces selon la revendication 6, caractérisé en ce que le rebord de scellement (20) présente des boulons (21, 29) avec lesquels il est guidé dans le corps principal (1).

8. Dispositif de serrage de pièces selon la revendication 7, caractérisé par des ressorts de pression (23) qui serrent préliminairement les rebords de scellement (20) contre l'unité de fraisage.

9. Dispositif de serrage de pièces selon l'une des revendications 1 à 8, carctérisé en ce qu'il peut se déplacer axialement.

10. Dispositif de serrage de pièces selon la revendication 9, caractérisé en ce qu'il est guidé sur la partie inférieure (17) supportant l'unité de fraisage.

FIG. 1

FIG. 2

# FIG. 3

# FIG. 4

# FIG. 5